(19) Europäisches Patentamt / European Patent Office / Office européen des brevets

(11) **EP 3 660 176 A1**

(12) **EUROPEAN PATENT APPLICATION**
published in accordance with Art. 153(4) EPC

(43) Date of publication:
**03.06.2020 Bulletin 2020/23**

(51) Int Cl.:
***C22C 1/08*** (2006.01)

(21) Application number: **19850780.8**

(86) International application number:
**PCT/JP2019/022462**

(22) Date of filing: **06.06.2019**

(87) International publication number:
**WO 2020/039693 (27.02.2020 Gazette 2020/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.08.2018 JP 2018157311**

(71) Applicant: **SUMITOMO ELECTRIC TOYAMA Co., Ltd.**
**Imizu-shi**
**Toyama 934-8522 (JP)**

(72) Inventor: **The designation of the inventor has not yet been filed**

(74) Representative: **Boult Wade Tennant LLP**
**Salisbury Square House**
**8 Salisbury Square**
**London EC4Y 8AP (GB)**

(54) **METAL POROUS BODY AND METHOD FOR MANUFACTURING METAL POROUS BODY**

(57) A metal porous material in long sheet form that includes a frame having a three-dimensional network configuration. An end portion of the metal porous material in width direction has a burr with a length equal to or longer than 0.3 mm in a number equal to or less than 0.4 burrs/m.

FIG.4

**Description**

TECHNICAL FIELD

The present disclosure relates to a metal porous material and a method of producing a metal porous material. The present application claims priority to Japanese Patent Application No. 2018-157311 filed on August 24, 2018, the disclosure of which is hereby incorporated by reference in its entirety.

BACKGROUND ART

Metal porous materials in sheet form that include a frame having a three-dimensional network configuration are used in various applications such as heat resistant filters, battery electrode plates, catalyst carriers, and metal composite materials. For instance, nickel metal porous material Celmet (manufactured by Sumitomo Electric Industries, Ltd., registered trademark) is widely used in various industries as an electrode of an alkaline rechargeable battery, such as a nickel-metal hydride battery, and as a carrier for an industrial deodorizing catalyst. Aluminum metal porous material Aluminum-Celmet (manufactured by Sumitomo Electric Industries, Ltd., registered trademark) is stable in organic electrolyte solution and therefore usable as a positive electrode of a lithium-ion battery.

The metal porous material may be produced by performing electrically conductive treatment on a surface of a frame of a resin porous material to make the surface electrically conductive, then performing electroplating to plate the surface of the frame of the resin porous material with metal, and then removing the resin porous material (see Japanese Patent Laying-Open No. 05-031446 (PTL 1) and Japanese Patent Laying-Open No. 2011-225950 (PTL 2), for example).

CITATION LIST

PATENT LITERATURE

PTL 1: Japanese Patent Laying-Open No. 05-031446
PTL 2: Japanese Patent Laying-Open No. 2011-225950

SUMMARY OF INVENTION

A metal porous material according to an aspect of the present disclosure is
a metal porous material in long sheet form that includes a frame having a three-dimensional network configuration, wherein
an end portion of the metal porous material in width direction has a burr with a length equal to or longer than 0.3 mm in a number equal to or less than 0.4 burrs/m.

A method of producing a metal porous material according to an aspect of the present disclosure is a method of producing the metal porous material according to an aspect of the present disclosure, the method including:

a cutting step involving cutting a metal porous material in long sheet form that includes a frame having a three-dimensional network configuration, the cutting being performed in longitudinal direction with two slitter blades in disc shape consisting of an upper slitter blade and a lower slitter blade, wherein
in the cutting step, at least one of the slitter blades is pressed against the other one of the slitter blades and thereby cutting edges of the two slitter blades in disc shape are in contact with each other.

BRIEF DESCRIPTION OF DRAWINGS

Fig. 1 is a schematic view of an example metal porous material according to an embodiment of the present disclosure.
Fig. 2 is a sectional photograph of an example metal porous material according to an embodiment of the present disclosure.
Fig. 3 is an expanded view schematically illustrating a partial cross section of an example metal porous material according to an embodiment of the present disclosure.
Fig. 4 is a schematic view of end portions of an example metal porous material according to an embodiment of the present disclosure in width direction.
Fig. 5 is a schematic view of an example of warping of end portions of an example metal porous material according to an embodiment of the present disclosure in width direction.
Fig. 6 is a schematic view of another example of warping of end portions of an example metal porous material according to an embodiment of the present disclosure in width direction.
Fig. 7 is a schematic view of an example method of producing a metal porous material according to an embodiment of the present disclosure.
Fig. 8 is a schematic view of an example configuration of two slitter blades in disc shape used in a cutting step of a method of producing a metal porous material according to an embodiment of the present disclosure.
Fig. 9 is a schematic view of another example configuration of two slitter blades in disc shape used in a cutting step of a method of producing a metal porous material according to an embodiment of the present disclosure.
Fig. 10 is a schematic view of an example of overlapping of two slitter blades in disc shape used in a cutting step of a method of producing a metal porous material according to an embodiment of the present disclosure.

Fig. 11 is a photograph of an end portion of a metal porous material No. 1 in width direction B, wherein metal porous material No. 1 is prepared in an example.

Fig. 12 is a photograph of an end portion of a metal porous material No. A in width direction B, wherein metal porous material No. A is prepared in a comparative example.

DETAILED DESCRIPTION

[Problem to be Solved by the Present Disclosure]

Industrial mass manufacturing of metal porous material involves continuously producing a metal porous material using a resin molded article in long sheet form as a substrate and then, as needed, cutting the resulting metal porous material into a desired width (slit processing). Examples of the technique to cut the metal porous material in long sheet form include the following: a technique involving placing the metal porous material on a platform and pressing a slitter blade in disc shape against the metal porous material from above to achieve cutting; and a technique involving using a pair of slitter blades located on the upper side and the lower side, respectively, of the metal porous material to achieve cutting.

According to research conducted by the inventors of the present invention, the above-mentioned cutting techniques are accompanied by a high rate of formation of burrs, which are parts of a frame of the metal porous material protruding from a cut surface of the metal porous material. Burr formation occurs due to brittle fracture of the frame of the metal porous material at the cut surface of the metal porous material. Burr formation during production of a metal porous material is unfavorable because it allows metal powder contamination in the manufacturing line.

An object of the present disclosure is to provide a metal porous material in long sheet form that includes a frame having a three-dimensional network configuration and that has a small number of burrs at an end portion thereof in width direction, and to provide a method of producing the same.

[Advantageous Effect of the Present Disclosure]

The present disclosure is capable of providing a metal porous material in long sheet form that includes a frame having a three-dimensional network configuration and that has a small number of burrs at an end portion thereof in width direction, and also providing a method of producing the same.

[Description of Embodiments]

First, a description will be given of each aspect of the present disclosure.

(1) A metal porous material according to an aspect of the present disclosure is

a metal porous material in long sheet form that includes a frame having a three-dimensional network configuration, wherein

an end portion of the metal porous material in width direction has a burr with a length equal to or longer than 0.3 mm in a number equal to or less than 0.4 burrs/m.

According to the aspect disclosed by (1) above, a metal porous material in long sheet form that includes a frame having a three-dimensional network configuration and that has a small number of burrs at an end portion thereof in width direction is provided.

Hereinafter, the metal porous material in long sheet form that includes a frame having a three-dimensional network configuration is also simply called "metal porous material".

A "burr" of the metal porous material according to an embodiment of the present disclosure refers to a part of an end portion of the metal porous material in width direction that protrudes in width direction from an end face of the metal porous material in width direction. The end face in width direction refers to a hypothetical face that is in contact with a large majority of outer-most portions of the metal porous material in width direction B (parts of the frame each at an outer-most portion of the metal porous material in width direction B).

The "length of a burr" of the metal porous material according to an embodiment of the present disclosure refers to the distance in width direction between the outer-most portion of the burr and the bottom of the internal cavity (hollow portion) hollowed at the base of the burr from the end face of the metal porous material in width direction.

(2) Preferably, the end portion of the metal porous material according to (1) above in width direction has a warpage equal to or smaller than 2.0 mm.

According to the aspect disclosed by (2) above, a flat metal porous material with no deformation of an end portion thereof in width direction is provided.

(3) Preferably, the metal porous material according to (1) or (2) above

has a thickness not less than 0.1 mm and not more than 3.0 mm.

Regarding the aspect disclosed by (3) above,

(4) it is preferable that the metal porous material according to any one of (1) to (3) above

have an average pore size not less than 100 μm and not more than 2000 μm.

(5) It is preferable that the metal porous material according to any one of (1) to (4) above have a porosity not less than 40% and not more than 98%.

According to the aspect disclosed by any one of (3) to (5) above, a metal porous material that is lightweight, has a great surface area of its frame, and has a high strength is produced.

(6) A method of producing a metal porous material according to an embodiment of the present disclosure is a method of producing the metal porous material according to (1) above, the method including:

a cutting step involving cutting a metal porous material in long sheet form that includes a frame having a three-dimensional network configuration, the cutting being performed in longitudinal direction with two slitter blades in disc shape consisting of an upper slitter blade and a lower slitter blade, wherein

in the cutting step, at least one of the slitter blades is pressed against the other one of the slitter blades and thereby cutting edges of the two slitter blades in disc shape (the outer circumferential end portions of principal surfaces of the discs) are in contact with each other.

According to the aspect disclosed by (6) above, a method of producing a metal porous material in long sheet form that includes a frame having a three-dimensional network configuration and that has a small number of burrs at an end portion thereof in width direction is provided.

(7) Preferably, in the method of producing a metal porous material according to (6) above, a spring is used to press the one of the slitter blades in disc shape against the other one of the slitter blades in disc shape, and a pressing force applied by the spring is equal to or higher than 5 N.

According to the aspect disclosed by (7) above, a method of producing a metal porous material in which cutting edges of the two slitter blades in disc shape remain in contact with each other in the cutting step and the metal porous material has a small number of burrs at an end portion thereof in width direction is provided.

(8) Preferably, in the method of producing a metal porous material according to (6) or (7) above, a hardness of a material of the one of the slitter blades is the same as or higher than a hardness of a material of the other one of the slitter blades.

According to the aspect disclosed by (8) above, a method of producing a metal porous material in which cutting edges of the two slitter blades in disc shape remain in contact with each other in the cutting step and the metal porous material has a small number of burrs at an end portion thereof in width direction is provided.

(9) Preferably, in the method of producing a metal porous material according to any one of (6) to (8) above,

an overlap width of the two slitter blades in disc shape consisting of an upper slitter blade and a lower slitter blade is not less than 0.5 mm and not more than 2.0 mm.

According to the aspect disclosed by (9) above, a method of producing a metal porous material that has a smaller number of burrs at an end portion thereof in width direction and has a small warpage at an end portion thereof in width direction is provided.

(10) Preferably, the method of producing a metal porous material according to any one of (6) to (9) above includes a removal step involving removing the burr present at the end portion of the metal porous material in width direction after the cutting step.

According to the aspect disclosed by (10) above, a method of producing a metal porous material that has a smaller number of burrs at an end portion thereof in width direction is provided.

(11) Preferably, the method of producing a metal porous material according to any one of (6) to (10) above includes a flattening step involving flattening the metal porous material by passing the metal porous material between a pair of rolls after the cutting step, where each roll has a size that is greater than a size of the metal porous material in width direction.

According to the aspect disclosed by (11) above, a method of producing a metal porous material that has a smaller warpage at an end portion thereof in width direction is provided.

[Detailed Description of Embodiments]

In the following, a more detailed description will be given of specific examples of a metal porous material and a method of producing a metal porous material each according to an aspect of the present disclosure. It is intended that the scope of the present invention is defined by claims, not by the examples given below, and encompasses all modifications and variations equivalent in meaning and scope to the claims.

<Metal porous material>

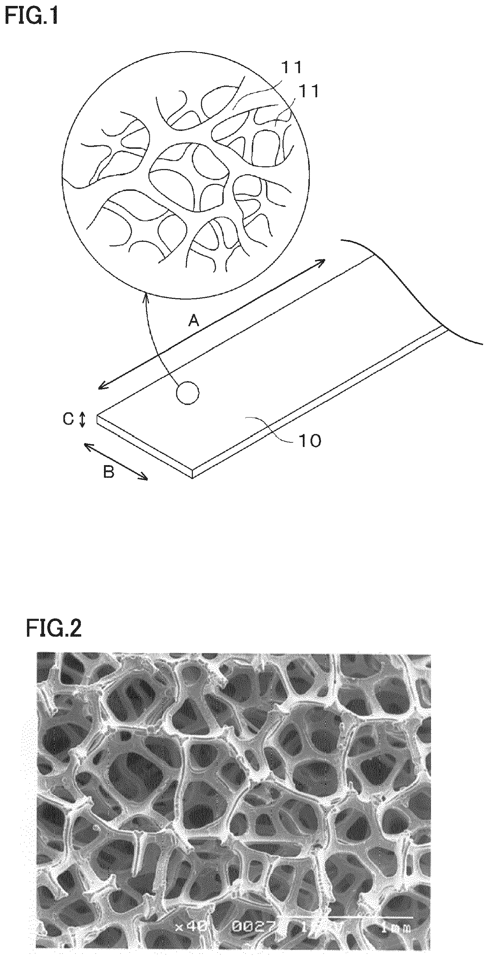

Fig. 1 is a schematic view of an example metal porous material according to an embodiment of the present disclosure.

As shown in Fig. 1, a metal porous material 10 according to an embodiment of the present disclosure includes a frame 11 having a three-dimensional network configuration and has an outer shape in long sheet form.

Frame 11 having a three-dimensional network configuration defines a pore portion, which is a continuous pore that connects a surface of metal porous material 10 to inside the metal porous material 10. Frame 11 may be made of a film of a metal or an alloy. Examples of the metal include nickel, aluminum, and copper. Examples of the alloy include the metal alloyed with other metals whether inevitably or intentionally.

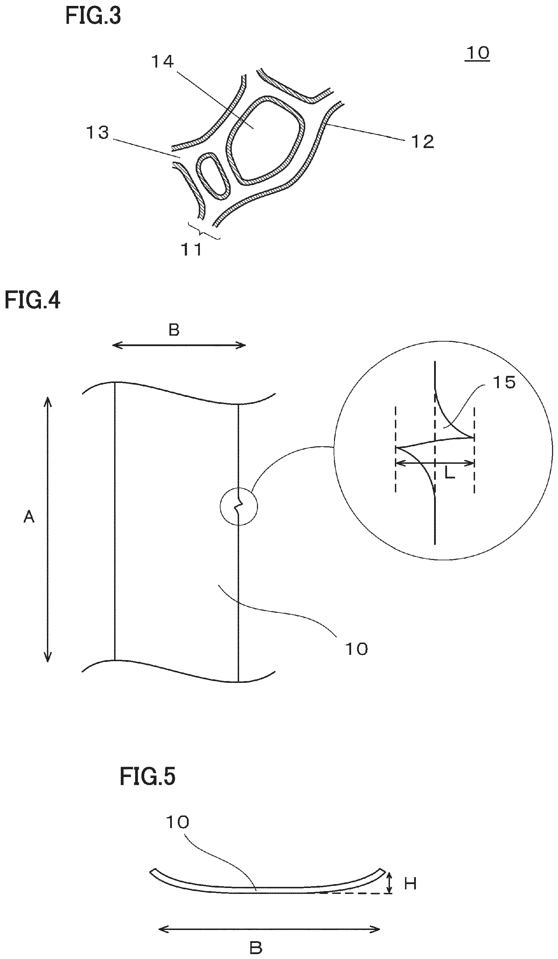

Fig. 2 is a magnified photograph of a frame having a three-dimensional network configuration of an example metal porous material according to an embodiment of the present disclosure. Fig. 3 is an enlarged scheme view of a cross section of the metal porous material shown in Fig. 2.

When the shape of frame 11 of metal porous material 10 has a three-dimensional network configuration, frame 11 of metal porous material 10 is made of a film 12 of a metal or an alloy and has a hollow interior portion 13, which typically looks as shown in Fig. 3. A pore portion 14 defined by frame 11 is a continuous pore as described above.

The length of metal porous material 10 according to an embodiment of the present disclosure in longitudinal direction A is not particularly limited and may be, for example, not less than about 60 m and not more than about 600 m.

Fig. 4 is a schematic view of end portions of an example metal porous material 10 according to an embodiment of the present disclosure in width direction B. The width direction B of metal porous material 10 refers to a direction orthogonal to both longitudinal direction A and a thickness direction C of metal porous material 10 (see Fig. 1).

An end portion of metal porous material 10 in width direction B has a burr 15 with a length L equal to or longer than 0.3 mm in a number equal to or less than 0.4 burrs/m. When length L of burr 15 is equal to or longer than 0.3 mm, burr 15 readily comes off. Burr 15 having come off can contaminate the resulting product, as metal foreign matter. When burr 15 contaminates the resulting product, burr 15 can cause a short circuit when, for instance, metal porous material 10 is used in a battery.

Referring to Fig. 4, burr 15 refers to a part of an end portion of metal porous material 10 in width direction B that protrudes in width direction (outwardly) from an end face of metal porous material 10 in width direction B.

The end face of metal porous material 10 in width direction B refers to a hypothetical face that is in contact with a large majority of outer-most portions of metal porous material 10 in width direction B (parts of the frame each at an outer-most portion of metal porous material 10 in width direction B). For instance, in Fig. 4 which is a plan view viewed in thickness direction C of metal porous material 10, an end face of metal porous material 10 in width direction B is seen as the central dotted line in the circled expanded view of burr 15.

Burr 15 is a part of the frame that protrudes in width direction B from the end face. The presence of burr 15 may be checked in the plan view viewed in a direction parallel to thickness direction C of metal porous material 10.

Referring to Fig. 4, at the base of burr 15, there is a hollow portion in frame 11 (hollowed, near burr 15, internally in width direction from the end face of the metal porous material in width direction). As seen in this drawing, burr 15 is formed as a result of, for example, the following events: brittle fracture of frame 11 occurs inside the end face of metal porous material 10 in width direction B; and frame 11 protrudes outwardly from the end face in width direction B.

Referring to Fig. 4, the "length L of burr 15" of metal porous material 10 according to an embodiment of the present disclosure refers to a distance (L) in width direction B between the outer-most portion (the outer-most point, which is the rightmost point in Fig. 4) of burr 15, which protrudes outwardly from the end face of metal porous material 10 in width direction B, and the bottom (the innermost point, which is the leftmost point in Fig. 4) of the internal cavity (hollow portion) hollowed at the base of burr 15 from the end face of metal porous material 10 in width direction B.

As described above, the end portion of metal porous material 10 according to an embodiment of the present disclosure in width direction B has burr 15 in a number equal to or less than 0.4 burrs/m for the length in longitudinal direction A. When the number of burrs 15 is more than 0.4 burrs/m, the probability of one metal porous material 10 after cut in product size having one or more burrs 15 tends to increase greatly. It is preferable that the number of burrs 15 at the end portion in width direction B be as small as possible. For this reason, the number of burrs 15 at the end portion of metal porous material 10 in width direction B is more preferably equal to or less than 0.2 burrs/m, further preferably equal to or less than 0.1 burrs/m, for the length in longitudinal direction A.

It is preferable that the warpage of the end portion of metal porous material 10 in width direction B be as small as possible, preferably equal to or smaller than 2.0 mm, more preferably equal to or smaller than 1.0 mm, further preferably equal to or smaller than 0.5 mm. This is because when the warpage of the end portion in width direction B is equal to or smaller than 2.0 mm, there is only a small chance for warpage to remain after warpage correction with the use of rolls.

Fig. 5 is a schematic view of an example of warping of end portions of an example metal porous material 10 in width direction B. Generally, end portions of a metal porous material in long sheet form in width direction may warp after slit processing performed in longitudinal direction. In the example shown in Fig. 5, end portions of metal porous material 10 in width direction B are warped upward. The warpage of an end portion of metal porous material 10 in width direction B refers to a distance H between the lower side of the end portion of metal porous material 10 in width direction B and a flat plate on which metal porous material 10 is placed.

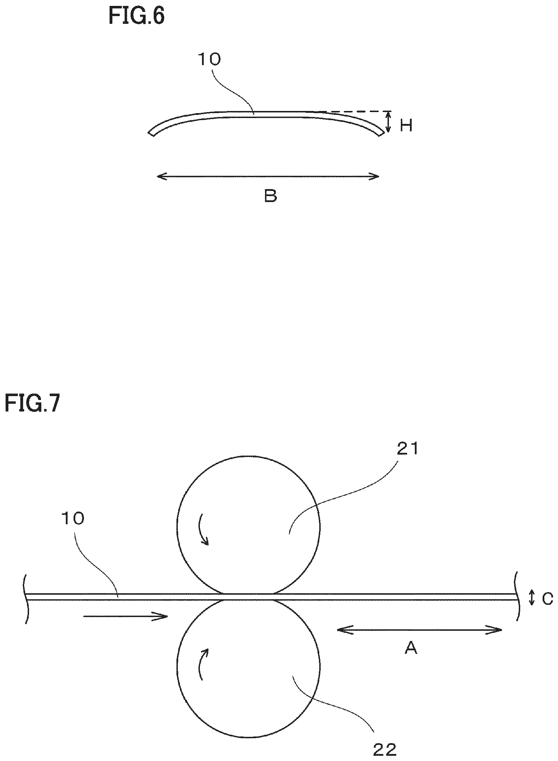

Fig. 6 is a schematic view of an example of downward warping of end portions of metal porous material 10 in width direction B. When an end portion of metal porous material 10 in width direction B is warped as shown in Fig. 6, the warpage may be measured after inverting metal porous material 10 into the state shown in Fig. 5.

The thickness of metal porous material 10 according to an embodiment of the present disclosure may be selected as appropriate in accordance with the applications of the metal porous material. The thickness of metal porous material 10 may be measured with a digital thickness gauge, for example. In many cases, when the thickness is not less than 0.1 mm and not more than 3.0 mm, the metal porous material may be lightweight and highly strong. From these viewpoints, the thickness of metal porous material 10 is more preferably not less than 0.3 mm and not more than 2.5 mm, further preferably not less than 0.4 mm and not more than 2.0 mm.

The average pore size of metal porous material 10 according to an embodiment of the present disclosure may be selected as appropriate in accordance with the applications of the metal porous material. The average pore size of metal porous material 10 refers to a value obtained in the following manner: a surface of the metal porous material is examined with a microscope or the like in at least ten fields of view; the average number (nc) of cells per one inch (25.4 mm = 25400 $\mu$m) is counted; and calculation is carried out by the following equation.

$$\text{Average pore size } (\mu m) = 25400 \ \mu m/nc$$

When metal porous material 10 is used as a current collector of a battery, for instance, the average pore size of metal porous material 10 may be selected so that both the amount of active material filling pore portion 14 and the amount of active material used are favorable. When metal porous material 10 is used as a filter, the average pore size is selected according to the size of particles to trap.

In many cases, when the average pore size is not less than 100 $\mu$m and not more than 2000 $\mu$m, the metal porous material may be lightweight and highly strong. From these viewpoints, the average pore size of metal porous material 10 is more preferably not less than 200 $\mu$m and not more than 700 $\mu$m, further preferably not less than 300 $\mu$m and not more than 500 $\mu$m.

The porosity of metal porous material 10 according to an embodiment of the present disclosure may be selected as appropriate in accordance with the applications of the metal porous material. The porosity of metal porous material 10 is calculated by the following equation.

$$\text{Porosity } (\%) = [1-\{Mp/(Vp \times dp)\}] \times 100$$

Mp: Mass of metal porous material [g]
Vp: Volume of metal porous material based on outer shape [cm$^3$]
dp: Density of metal of metal porous material [g/cm$^3$]

When metal porous material 10 is used as a current collector of a battery, for instance, the porosity of metal porous material 10 may be selected so that both the amount of active material filling in pore portion 14 and the amount of active material used are favorable.

In many cases, when the porosity is not less than 40% and not more than 98%, the metal porous material may be lightweight and highly strong. From these viewpoints, the porosity of metal porous material 10 is more preferably not less than 70% and not more than 98%, further preferably not less than 90% and not more than 98%.

<Method of producing metal porous material>

A method of producing a metal porous material according to an embodiment of the present disclosure is a method of producing the above-described metal porous material according to an embodiment of the present disclosure. Fig. 7 is a schematic view of an example method of producing a metal porous material according to an embodiment of the present disclosure.

(Cutting step)

The method of producing a metal porous material according to an embodiment of the present disclosure includes a cutting step involving, as shown in Fig. 7, cutting metal porous material 10 in long sheet form that includes a frame having a three-dimensional network configuration, the cutting being performed in longitudinal direction with two slitter blades in disc shape consisting of an upper slitter blade and a lower slitter blade (in Fig. 7, a slitter blade 21 located on the upper side of metal porous material 10 and a slitter blade 22 located on the lower side of metal porous material 10).

At least one of the slitter blades is pressed against the other one of the slitter blades and, thereby, the cutting edges of the two slitter blades in disc shape used in the cutting step are in contact with each other (in a so-called zero clearance state). When metal porous material 10 is cut with the two slitter blades in disc shape the cutting edges of which are in contact with each other, shear failure of the frame is less likely to occur in the cut surface and the resulting metal porous material may have burr 15 (with a length L equal to or longer than 0.3 mm) in a number equal to or less than 0.4 burrs/m for the length in longitudinal direction A.

The two slitter blades in disc shape may have a configuration in which pressing force is applied to at least one of the slitter blades to make the one of the slitter blades pressed against the other one of the slitter blades, or may have a configuration in which pressing force is applied to both the slitter blades to make the slitter blades pressed against with each other. The cutting edges of the two slitter blades in disc shape engage with each other to cut metal porous material 10 (on the principle of scissors).

The technique to apply pressing force to at least one of the slitter blades is not particularly limited and may be the use of a spring or the use of air pressure, for example.

The size of the two slitter blades in disc shape is not particularly limited, and a preferable size may be, for example, not less than about 100 cm and not more than about 200 cm in diameter. The two slitter blades in disc shape may be single edged, and their cutting edges may be in contact with each other. The material of each of the two slitter blades in disc shape is not particularly limited and a preferable material may be, for example, SKH, SKD, and/or SUS.

The thickness, the average pore size, and the porosity of the metal porous material used in the method of producing a metal porous material according to an embodiment of the present disclosure may be selected as appropriate in accordance with the applications of the metal porous material, and may be set the same as for the thickness, the average pore size, and the porosity of metal porous material 10 according to an embodiment of the present disclosure described above.

When a spring is used to press the one of the slitter blades in disc shape against the other one of the slitter blades in disc shape, the pressing force applied by the spring is preferably equal to or higher than 5 N. With this configuration, the cutting edges of the two slitter blades in disc shape are likely to remain in contact with each other in the cutting step. When the pressing force applied by the spring is too great, the slitter blade pressed by the spring wears in a great amount. Therefore, the pressing force applied by the spring is preferably equal to or smaller than about 20 N. From these viewpoints, the pressing force applied by the spring is more preferably not less than 10 N and not more than 16 N.

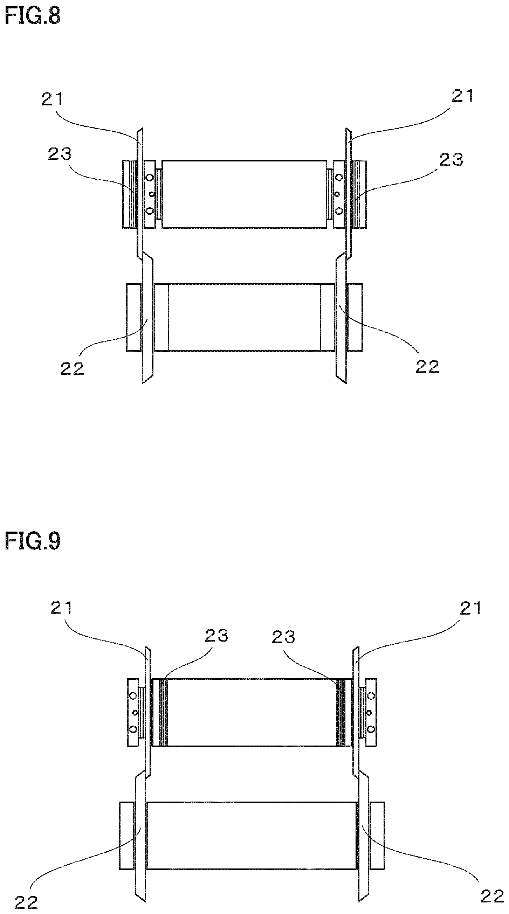

Fig. 8 is a schematic view of an example configuration of two slitter blades in disc shape used in the cutting step of the method of producing a metal porous material according to an embodiment of the present disclosure. In the example shown in Fig. 8, slitter blade 22 located on the lower side of metal porous material 10 is fixed at a predetermined position, and pressing force is applied by a pressing member 23 to slitter blade 21 located on the upper side of metal porous material 10. In this configuration, slitter blade 21 located on the upper side of metal porous material 10 (one of the slitter blades) is pressed against slitter blade 22 located on the lower side of metal porous material 10 (the other one of the slitter blades) and the cutting edges of the slitter blades remain in contact with each other. In the example configuration of slitter blades shown in Fig. 8, the end portions of metal porous material 10 in width direction B slightly warp after cutting, in a similar fashion as metal porous material 10 shown in Fig. 5.

Fig. 9 is a schematic view of another example configuration of two slitter blades in disc shape used in the cutting step of the method of producing a metal porous material according to an embodiment of the present disclosure. In the example shown in Fig. 9, the orientations of the cutting edges of both slitter blade 21 located on the upper side of metal porous material 10 and slitter blade 22 located on the lower side of metal porous material 10 are inverted from those in the configuration of slitter blades shown in Fig. 8. In the example configuration of slitter blades shown in Fig. 9, the end portions of metal porous material 10 in width direction B slightly warp after cutting, in a similar fashion as metal porous material 10 shown in Fig. 6.

It is preferable that the hardness of a material of the one of the slitter blades in disc shape be the same as or higher than the hardness of a material of the other one of the slitter blades in disc shape. The hardness of a slitter blade refers to Rockwell hardness (HCR).

In the examples shown in Figs. 8 and 9, it is preferable that the material of slitter blade 21 located on the upper side of metal porous material 10 be the same as the material of slitter blade 22 located on the lower side of metal porous material 10 or, alternatively, the material of slitter blade 21 located on the upper side of metal porous material 10 be harder than the material of slitter blade 22 located on the lower side of metal porous material 10. Generally, the slitter blade (one of the slitter blades) applied with pressing force and pressed against the other one of the slitter blades tends to wear in a greater amount at its cutting edge. Therefore, with the configuration in which the hardness of the material of the one of the slitter blades is the same as or higher than the hardness of the material of the other one of the slitter blades, the wear at the cutting edge may be decreased and clearance formation may be mitigated while metal porous material 10 is being cut.

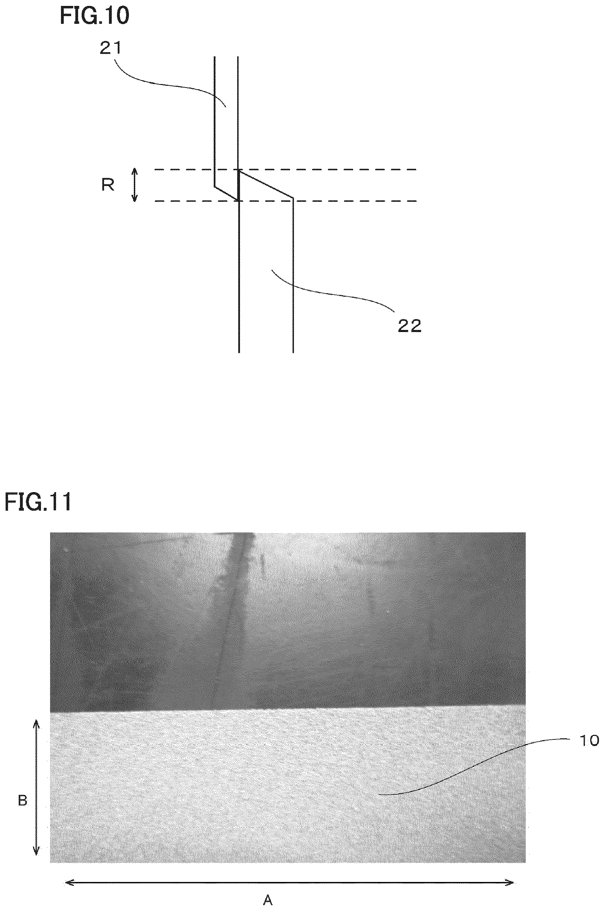

It is preferable that an overlap width of the two slitter blades in disc shape consisting of an upper slitter blade and a lower slitter blade be not less than 0.5 mm and not more than 2.0 mm. The overlap width refers to a length R of the area of overlap between the two slitter blades in disc shape in a plan view viewed in thickness direction of the two slitter blades in disc shape, where length R is a length in a radial direction of the discs (the direction of the line connecting the centers of the two slitter blades in disc shape). Fig. 10 is a schematic view of an example of overlapping of two slitter blades in disc shape used in the cutting step of the method of producing a metal porous material according to an embodiment of the present disclosure. Referring to Fig. 10, which is a plan view viewed in thickness direction of slitter blades 21, 22 (the lateral direction in Fig. 10), the overlap width refers to length R of the area of overlap between slitter blade 21 located on the upper side of metal porous material 10 and slitter blade 22 located on the lower side of metal porous material 10 (the area between the dotted lines in Fig. 10), where length R is a length in a radial direction of the discs (the direction of the line connecting the centers of slitter blades 21, 22; the vertical direction in Fig. 10).

An overlap width of the two slitter blades in disc shape equal to or greater than 0.5 mm is suitable for cutting metal porous material 10 without leaving any uncut part. When the overlap width is too great, metal porous material 10 is cut in a slanting direction at a cut surface and therefore shearing force is likely to be generated. Therefore, it is preferable that the overlap width be equal to or smaller than 2.0 mm. When the overlap width is small, formation of burrs 15 may also be reduced. From these viewpoints, the overlap width of the two slitter blades in disc shape is more preferably not less than 0.5 mm and not more than 1.5 mm, further preferably not less than 0.5 mm and not more than 1.0 mm.

(Removal step)

It is preferable that the method of producing a metal porous material according to an embodiment of the present disclosure include a removal step involving removing burr 15 present at the end portion of metal porous material 10 in width direction B after the cutting step. After metal porous material 10 is subjected to the above-described cutting step, a small number of burrs 15 (about 0.4 burrs/m) are formed which are parts of frame 11 protruding from the end portion of metal porous material 10 in width direction B. When burr 15 is formed, removal of burr 15 may be performed by the removal step. The technique to remove a burr in the removal step is not particularly limited and the removal may be carried out by, for example, passing metal porous material 10 through a structure (guide) the size of which is the same as the size of metal porous material 10 in width direction B or using a rotational roll.

(Flattening step)

It is preferable that the method of producing a metal porous material according to an embodiment of the present disclosure include a flattening step involving flattening metal porous material 10 by passing metal porous material 10 between a pair of rolls (edge-crushing rolls) after the cutting step, where each roll has a size that is greater than the size of metal porous material 10 in width direction B. The end portion in width direction B is warped after metal porous material 10 is subjected to the above-described cutting step, but the flattening step is capable of producing metal porous material 10 that is flat in width direction B with a warpage of the end portion in width direction B being equal to or smaller than 2.0 mm.

In the flattening step, a pair of rolls with a width greater than the size of metal porous material 10 in width direction B are used. The gap between the pair of rolls may be substantially the same as the thickness of metal porous material 10. When metal porous material 10 is passed through the gap between the pair of rolls disposed in the above manner, pressure is applied by the pair of rolls to the entire span of metal porous material 10 in width direction B to eliminate the warping of the end portion in width direction B and thereby metal porous material 10 that is flat is obtained. By adjusting the gap between the pair of rolls, metal porous material 10 with a smaller warpage of the end portion in width direction B may be produced.

[Examples]

In the following, a more detailed description of the present disclosure will be given in the form of examples. These examples are given by way of illustration, and the metal porous material and the method of producing the same according to the present invention are not limited to those in these examples. The scope of the present invention is defined by claims, and encompasses all modifications and variations equivalent in meaning and scope to the claims.

[Example 1]

A metal porous material made of nickel with a length in longitudinal direction A of 200 m and a thickness of 1 mm was prepared. The metal porous material made of nickel included a frame having a three-dimensional network configuration and had an average pore size of 400 $\mu$m and a porosity of 98%.

(Cutting step)

The metal porous material was cut with slitter blades having the configuration shown in Fig. 8 into a size in width direction B of 0.2 m, and thereby a metal porous material No. 1 was produced.

Slitter blade 21 located on the upper side of the metal porous material was made of high-speed steel (SKH55) (with a Rockwell hardness equal to or higher than HCR64) and had a diameter of 160 cm. Slitter blade 22 located on the lower side of the metal porous material was also made of high-speed steel (SKH55) (with a Rockwell hardness equal to or higher than HCR64) and had a diameter of 160 cm. Slitter blade 22 was fixed by caulking, and a coned disc spring was used to apply a pressing force of 15 N to slitter blade 21. This made slitter blade 21 be pressed against slitter blade 22 and their cutting edges be in contact with each other. The overlap width of slitter blade 21 and slitter blade 22 was 1.0 mm.

Metal porous material No. 1 after the cutting step had a very small number of burrs at the end portions thereof in width direction B. The number of burrs at both end portions was 0.1 burrs/m and 0.2 burrs/m, respectively. The end portions of metal porous material No. 1 in width direction B after the cutting step were warped as shown in Fig. 5, with a warpage of 1.0 mm.

(Flattening step)

Metal porous material No. 1 after the cutting step was passed through a gap between a pair of rolls (edge-crushing rolls) both of which had a length of 0.2 m and were disposed to define a gap of 1 mm between them. As a result, the warping of the end portions of metal porous material No. 1 in width direction B was eliminated and a warpage of 0 mm was achieved.

(Photograph)

Fig. 11 is a photograph of an end portion of metal porous material No. 1 in width direction B after the flattening step. As shown in Fig. 11, the end portion of metal porous material No. 1 in width direction B had almost no burrs.

[Example 2]

A metal porous material No. 2 was obtained in the same manner as in Example 1 except that the overlap width of slitter blade 21 and slitter blade 22 was 0.5 mm in the cutting step.
Metal porous material No. 2 after the cutting step had a very small number of burrs at the end portions thereof in width direction B. The number of burrs at both end portions was 0 burr/m and 0.2 burrs/m, respectively. The end portions of metal porous material No. 2 in width direction B after the cutting step were warped as shown in Fig. 5, with a warpage of 1.0 mm.
The flattening step was carried out in the same manner as in Example 1, and as a result, the warpage of the end portions in width direction B was made to be 0 mm.

[Comparative Example]

A metal porous material No. A was obtained in the same manner as in Example 1 except that the application of pressing force to slitter blade 21 with the use of a coned disc spring was not carried out but instead slitter blade 21 was fixed by caulking in such a way that it came into contact with the cutting edge of slitter blade 22.
Metal porous material No. A had slightly more burrs at the end portions thereof in width direction B. The number of burrs at both end portions was 11 burrs/m and 23 burrs/m, respectively. The reason why the number of burrs slightly increased may be as follows: cutting the metal porous material proceeded well in the beginning but, then, gradually as the cutting continued, a gap (of about 0.05 mm) was formed between the cutting edges of slitter blade 21 and slitter blade 22 to slightly increase the number of burrs. The end portions of metal porous material No. A in width direction B after the cutting step were warped as shown in Fig. 5, with a warpage of 3.0 mm.
The flattening step was carried out in the same manner as in Example 1, and as a result, the warpage of the end portions in width direction B was made to be 0 mm.

(Photograph)

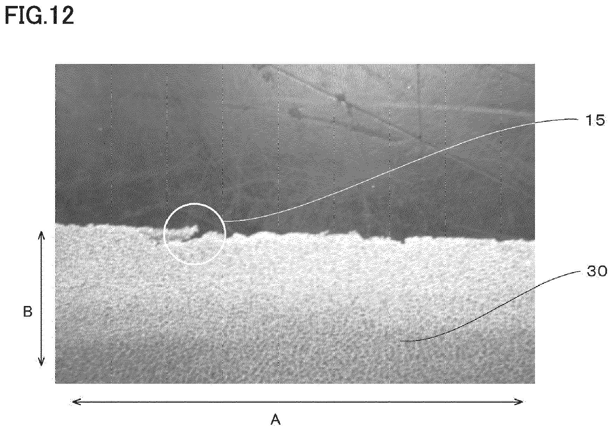

Fig. 12 is a photograph of an end portion of metal porous material No. A in width direction B after the flattening step. As shown in Fig. 12, the end portion of metal porous material No. A in width direction B was found to have slightly more burrs 15.

REFERENCE SIGNS LIST

10 metal porous material

    11 frame of metal porous material
    12 film of metal or alloy
    13 interior portion of frame
    14 pore portion
    15 burr
    21 slitter blade located on upper side of metal porous material
    22 slitter blade located on lower side of metal porous material
    23 pressing member
    30 metal porous material of comparative example
    A longitudinal direction of metal porous material
    B width direction of metal porous material
    C thickness direction of metal porous material
    L length of burr at end portion of metal porous material in width direction
    H height of warping of end portion of metal porous material in width direction
    R length of area of overlap between cutting edges of two slitter blades in disc shape (overlap width)

**Claims**

1. A metal porous material in long sheet form comprising a frame having a three-dimensional network configuration, wherein
an end portion of the metal porous material in width direction has a burr with a length equal to or longer than 0.3 mm in a number equal to or less than 0.4 burrs/m.

2. The metal porous material according to claim 1, wherein the end portion of the metal porous material in width direction has a warpage equal to or smaller than 2.0 mm.

**3.** The metal porous material according to claim 1 or 2, wherein the metal porous material has a thickness not less than 0.1 mm and not more than 3.0 mm.

**4.** The metal porous material according to any one of claims 1 to 3, wherein the metal porous material has an average pore size not less than 100 μm and not more than 2000 μm.

**5.** The metal porous material according to any one of claims 1 to 4, wherein the metal porous material has a porosity not less than 40% and not more than 98%.

**6.** A method of producing the metal porous material according to claim 1, the method comprising:

a cutting step involving cutting a metal porous material in long sheet form that includes a frame having a three-dimensional network configuration, the cutting being performed in longitudinal direction with two slitter blades in disc shape consisting of an upper slitter blade and a lower slitter blade, wherein
in the cutting step, at least one of the slitter blades is pressed against the other one of the slitter blades and thereby cutting edges of the two slitter blades in disc shape are in contact with each other.

**7.** The method of producing a metal porous material according to claim 6, wherein a spring is used to press the one of the slitter blades in disc shape against the other one of the slitter blades in disc shape, and a pressing force applied by the spring is equal to or higher than 5 N.

**8.** The method of producing a metal porous material according to claim 6 or 7, wherein a hardness of a material of the one of the slitter blades is the same as or higher than a hardness of a material of the other one of the slitter blades.

**9.** The method of producing a metal porous material according to any one of claims 6 to 8, wherein an overlap width of the two slitter blades in disc shape consisting of an upper slitter blade and a lower slitter blade is not less than 0.5 mm and not more than 2.0 mm.

**10.** The method of producing a metal porous material according to any one of claims 6 to 9, the method comprising a removal step involving removing the burr present at the end portion of the metal porous material in width direction after the cutting step.

**11.** The method of producing a metal porous material according to any one of claims 6 to 10, the method comprising a flattening step involving flattening the metal porous material by passing the metal porous material between a pair of rolls after the cutting step, where each roll has a size that is greater than a size of the metal porous material in width direction.

## FIG.1

## FIG.2

FIG.3

14

13

11

12

10

FIG.4

B

A

15

L

10

FIG.5

10

H

B

**FIG.6**

**FIG.7**

FIG.8

FIG.9

FIG.10

FIG.11

FIG.12

## INTERNATIONAL SEARCH REPORT

International application No.

PCT/JP2019/022462

### A. CLASSIFICATION OF SUBJECT MATTER
Int. Cl. C22C1/08(2006.01)i

According to International Patent Classification (IPC) or to both national classification and IPC

### B. FIELDS SEARCHED

Minimum documentation searched (classification system followed by classification symbols)
Int. Cl. C22C1/08

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2015-125841 A (FDK CORPORATION) 06 July 2015, paragraphs [0003], [0024] (Family: none) | 1-11 |
| Y | JP 2018-092776 A (KABUSHIKI KAISHA TOYOTA JIDOSHOKKI) 14 June 2018, paragraphs [0003], [0024] (Family: none) | 1-11 |
| Y | JP 11-114878 A (HAGIWARA KOGYO KK) 27 April 1999, claims, paragraph [0032] (Family: none) | 6-11 |

☐ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 19.08.2019 | 27.08.2019 |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**EP 3 660 176 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018157311 A
- JP 5031446 A
- JP 2011225950 A